**Europäisches Patentamt**

**European Patent Office**

**Office européen des brevets**

(19)

(11) Veröffentlichungsnummer: **0 366 605 B1**

## (12) EUROPÄISCHE PATENTSCHRIFT

(45) Veröffentlichungstag der Patentschrift :
08.05.91 Patentblatt 91/19

(51) Int. Cl.$^5$ : **F15B 13/043**

(21) Anmeldenummer : **89810753.7**

(22) Anmeldetag : **04.10.89**

(54) Elektrohydraulische oder -pneumatische Stellvorrichtung.

Teilanmeldung 90120263.0 eingereicht am 04/10/89.

(30) Priorität : 25.10.88 CH 3972/88

(43) Veröffentlichungstag der Anmeldung :
02.05.90 Patentblatt 90/18

(45) Bekanntmachung des Hinweises auf die Patenterteilung :
08.05.91 Patentblatt 91/19

(84) Benannte Vertragsstaaten :
AT DE FR GB IT NL SE

(56) Entgegenhaltungen :
EP-A- 0 118 344
DE-A- 3 437 150
FR-A- 2 425 599
US-A- 4 298 181

(73) Patentinhaber : GEBRÜDER SULZER AKTIENGESELLSCHAFT
Zürcherstrasse 9
CH-8401 Winterthur (CH)

(72) Erfinder : Veletovac, Sead
Wülflingerstrasse 22/IV
CH-8400 Winterthur (CH)

## Beschreibung

Die Erfindung betrifft eine Stellvorrichtung mit den Merkmalen des Oberbegriffs des Anspruchs 1. Das Ventil dieser Stellvorrichtung kann – je nach Anwendung – ein Servoventil oder ein Proportionalventil sein.

Eine elektropneumatische Stellvorrichtung dieser Art ist aus der US-A-4 298 181 bekannt. Bei dieser Stellvorrichtung besteht jedes Stellorgan aus einem recteckigen membranartigen Piezokristall, der sich beim Anlegen einer elektrischen Spannung verbiegt und dadurch das zugehörige, als Kugel ausgebildete Auf/Zu-Ventil betätigt, und zwar in schliessendem Sinne. Im spannungslosen Zustand der Stellorgane sind also die Auf/Zu-Ventile offen, was bedeutet, dass dann ständig Druckmittel entweicht. Diese Leckverluste müssen dauernd ausgeglichen werden, so dass der Energieaufwand dafür entsprechend hoch ist. Mit den membranartigen Piezokristallen lassen sich nur relativ kleine Stellkräfte erzeugen. Bei der bekannten Stellvorrichtung ist ausserdem das den Steuerschieber enthaltende Ventil als Wegventil ausgebildet, was bedeutet, dass sich der Steuerschieber bei einer Aenderung seiner Druckbeaufschlagung immer in eine Endstellung bewegt; es sind also keine Zwischenstellungen des Steuerschiebers möglich, um die Zufluss- und die Abflussmenge von Druckmittel zum bzw. vom Stellzylinder zu variieren.

Andererseits ist aus der FR-A-2 425 599 ein Regelventil bekannt, das z.B. in der Vakuumtechnik verwendet wird und mit dem sehr kleine Mengen von unter tiefem Druck befindlichem Gas geregelt werden sollen. Dieses Ventil weist einen Verschlussteil in Form einer Kugel auf, die in einen tellerartigen, im Ventilgehäuse geführten Bauteil gefasst ist. An diesem Bauteil ist eine Stange befestigt, die sich durch einen Stellmotor erstreckt, der aus einer Säule von Piezoscheiben besteht, die beim Anlegen einer elektrischen Spannung ihre Dicke ändern. Die Dickenänderung vergrössert die Höhe der Säule, was über die Stange und den tellerartigen Bauteil ein Abheben der Kugel vom Ventilsitz zur Folge hat. Ein solcher Piezomotor hat wegen der Scheibensäule eine relativ grosse Baulänge, was beim Anbauen an eine Stell-. vorrichtung der eingangs genannten Art zu einer sperrigen Bauform führen würde.

Der Erfindung liegt die Aufgabe zugrunde, eine Stellvorrichtung der eingangs genannten Art dahingehend zu verbessern, dass sie eine kompakte Bauform ergibt und mit geringeren Leckverlusten arbeiten kann und dass mit den Stellorganen grössere Kräfte erzeugt werden können.

Diese Aufgabe wird erfindungsgemäss durch die Merkmale des Kennzeichens des Anspruchs 1 gelöst. Durch die an sich bekannte Ausbildung der Stellorgane als Stellmotore mit mehreren, nach dem Piezoeffekt wirkenden Scheiben lassen sich bedeutend grössere Stellkräfte erzeugen als mit membranartigen Piezokristallen. Je mehr Scheiben im Stellmotor vereinigt sind, desto grösser wird die Stellkraft. Durch die Verwendung von Stellmotoren der genannten Art wird es möglich, den Steuerschieber schnelle, kurze und präzise Bewegungen ausführen zu lassen, was sich auch auf ein entsprechend exaktes Stellverhalten des Stellzylinders auswirkt. Da die Auf/Zu-Ventile sich in Schliessstellung befinden, wenn der Steuerschieber in der Ruhestellung ist, werden die Leckverluste des Druckmittels erheblich verringert, weil Druckmittel nur noch während der kurzen Zeiten abströmt, in denen diese Ventile offen stehen. Durch das parallele Anordnen der Piezomotoren beidseits des Steuerschiebers wird die Bauform der Stellvorrichtung sehr kompakt.

Ein Ausführungsbeispiel der Erfindung wird in der folgenden Beschreibung anhand der Zeichnung näher erläutert. Es zeigen :

Fig. 1 einen Längsschnitt durch eine elektrohydraulische Stellvorrichtung mit zwei Piezo-Motoren als Stellmotoren,

Fig. 2 eine perspektivische Ansicht des Ventils nach Fig. 1 und

Fig. 3 ein Schaltschema des elektronischen Teils der Stellvorrichtung.

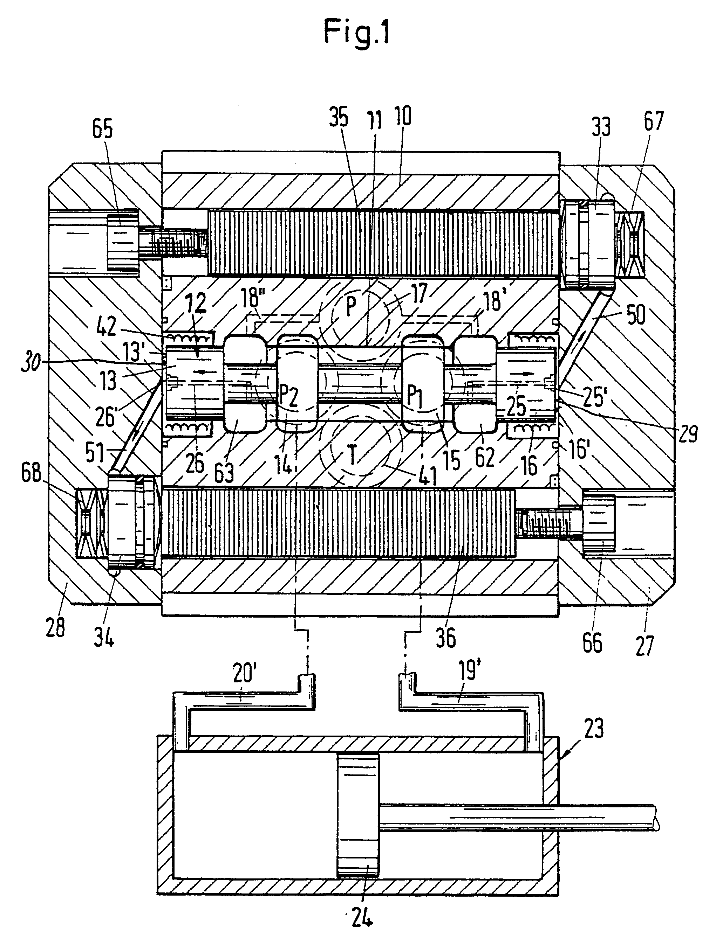

Gemäss Fig. 1 weist ein als Servoventil ausgebildetes Ventil der Stellvorrichtung einen Gehäuseblock 10 auf, der mit einer Längsbohrung 11 versehen ist, in der ein Steuerschieber 12 axial beweglich angeordnet ist. Der Steuerschieber weist vier kolbenartige Abschnitte 13 bis 16 auf, deren Durchmesser gleich dem der Bohrung 11 ist. Er ist mit den beiden äusseren Abschnitten 13 und 16 in der Bohrung 11 gelagert. In der in Fig. 1 gezeichneten Lage befindet sich der Steuerschieber 12 in seiner Neutrallage.

Am Gehäuseblock 10 befindet sich ein Anschluss 17 für die Zufuhr eines hydraulischen Druckmittels, das von einer nicht gezeichneten Pumpe in den Gehäuseblock gefördert wird. Vom Anschluss 17 führt ein Kanal 18′ in die Bohrung 11, und zwar in eine Ringnut 62 im Gehäuseblock zwischen den beiden Kolbenabschnitten 15 und 16 des Steuerschiebers 12. Ausserdem führt vom Anschluss 17 ein Kanal 18″ in eine im Gehäuseblock befindliche Ringnut 63 zwischen den beiden Kolbenabschnitten 13 und 14 des Steuerschiebers 12. In der in Fig. 1 gezeichneten Neutrallage sind auch die Kolbenabschnitte 14 und 15 von je einer Ringnut im Gehäuseblock 10 umgeben. An diese beiden Ringnuten ist je eine Leitung 20′ bzw. 19′ angeschlossen, die zu einem Kolbenmotor oder Stellzylinder 23 führen. Die Leitungen 19′ und 20′ münden beiderseits eines Kolbens 24 in das Gehäuse des Motors 23.

In den Kolbenabschnitten 13 und 16 an den Enden des Steuerschiebers 12 ist je ein Kanal 26 bzw. 25 angeordnet, die von dem von der Ringnut 62 bzw. 63 umgebenen Raum der Bohrung 11 ausgehen und in einen Raum 29 bzw. 30 an den Enden der Bohrung 11 führen. Die Räume 29 und 30 sind von je einem sie überspannenden, am Gehäuseblock 10 lösbar befestigten Deckel 27 bzw. 28 begrenzt. Die beiden Kanäle 25 und 26 enthalten je eine Drosselstelle 25′ bzw. 26′. Auf diese Weise wirkt der Druck des hydraulischen Druckmittels auf die beiden äusseren Stirnflächen 13′ und 16′ des Steuerschiebers 12. Von den Räumen 29 und 30 führt je ein im Deckel 27 bzw. 28 verlaufender Kanal 50 bzw. 51 zu einem im betreffenden Deckel untergebrachten, parallel zum Steuerschieber 12 verschiebbaren Verschlussteil 33 bzw. 34, die beide als Auf/Zu-Ventil wirken. Die Verschiebebewegung der Verschlussteile 33 und 34 wird durch je einen Piezo-Motor 35 bzw. 36 erzeugt, die beidseits des Steuerschiebers 12 parallel zu diesem im Gehäuseblock 10 angeordnet sind. Die beiden Auf/Zu-Ventile liegen somit diagonal zueinander.

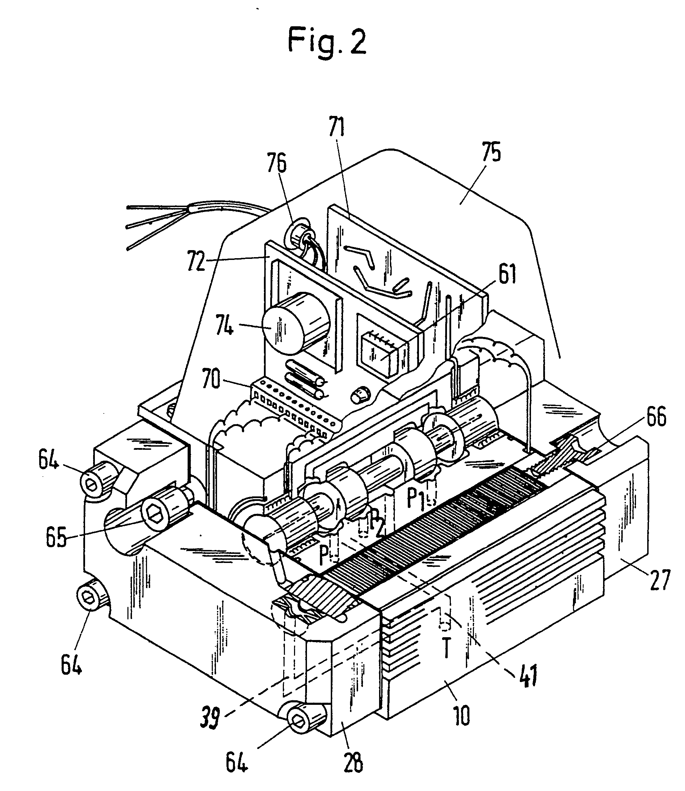

Die beiden Piezo-Motoren 35 und 36 sind durch je eine Schraube 65 bzw. 66 am Deckel 28 bzw. 27 befestigt, während die zugehörigen Verschlussteile 33 und 34 im jeweils gegenüberliegenden Deckel 27 bzw. 28 mittels je eines Tellerfelderpakets 67 bzw. 68 gegen den Piezo-Motor gedrückt werden. Die beiden Deckel 27 und 28 sind mittels je vier Schrauben 64 (Fig. 2) mit dem Gehäuseblock 10 lösbar verbunden. Durch Lösen dieser Schrauben 64 lässt sich also der Piezo-Motor 35 zusammen mit dem Deckel 27 aus dem Gehäuseblock ausbauen. Entsprechendes gilt für den Piezo-Motor 36 und den Deckel 28.

In Fig. 2 unterhalb des Tellerfederpaketes 68 ist im Deckel 28 und im Gehäuseblock 10 ein Kanal 39 vorgesehen, der an einem Anschluss 41 endet, der mit einem nicht gezeichneten Tank in Verbindung steht, in dem vom Auf/Zu-Ventil mit dem Verschlussteil 34 kommendes hydraulisches Druckmittel gesammelt wird. Eine entsprechende Verbindung besteht vom Verschlussteil 33 zum Anschluss 41. Der Anschluss 41 ist auch in nicht näher dargestellter Weise mit dem Raum zwischen den Kolbenabschnitten 14 und 15 des Steuerschiebers 12 verbunden.

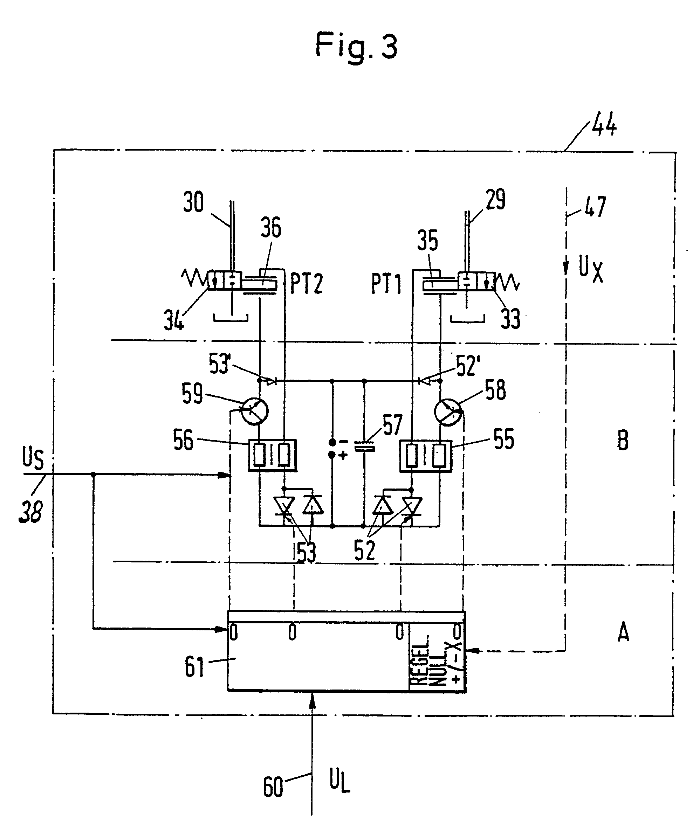

Die beiden aussenliegenden Kolbenabschnitte 13 und 16 des Steuerschiebers 12 sind von je einem integrierten Weggeber 42 umgeben, der als digitaler Stellungsgeber ausgebildet ist und seine Stellungssignale einer in Fig. 3 dargestellten elektronischen Schaltung 44 zuführt.

Die elektronische Schaltung 44 besteht gemäss Fig. 3 im wesentlichen aus einem Regelungsteil A in Form eines Mikroprozessors 61, der Regelsignale empfängt, verarbeitet und an einen elektrischen Ansteuerungsteil B weitergibt. Dem Regelungsteil A werden einerseits über einen Eingang 60 Regelsignale $U_L$ zugeführt, die z.B. von einem speicherprogrammierbaren Steuersystem (SPS) kommen. Andererseits werden dem Regelungsteil A über eine Leitung 47 die Stellungssignale $U_X$ vom Weggeber 42 zugeführt. Der Mikroprozessor verarbeitet diese Signale gemäss einem vorgegebenen wählbaren Satz von Regelparametern, wobei er die über den Eingang 60 zugeführten Regelsignale als Digitalsignale mit variabler Pulsbreite (auch Pulsdauermodulation genannt) an den Ansteuerungsteil B weitergibt, dem über einen Eingang 38 eine Niederspannung $U_S$ zugeführt wird.

Im Ansteuerungsteil B werden die vom Regelungsteil A kommenden Signale von der Niederspannung auf eine für die Piezo-Motoren nötige Spannung verstärkt. Der Ansteuerungsteil B weist hierzu je Piezo-Motor 35 und 36 eine Drossel 55 bzw. 56 auf. Zwischen jeder Drossel und dem zugehörigen Piezo-Motor ist ein Transistor 58 bzw. 59 eingeschaltet, der je nach seiner Schaltstellung, die vom Regelungsteil A gesteuert wird, das von der zugehörigen Drossel 55 bzw. 56 kommende verstärkte Digitalsignal zum Piezo-Motor 35 bzw. 36 durchlässt.

Der Ansteuerungsteil B enthält einen Kondensator 57, der zusammen mit drei Transistoren 52, 52′ bzw. 53, 53′ je Piezo-Motor ein Speichern der Energie des Piezo-Motors erlaubt.

Wie Fig. 2 erkennen lässt, bilden der Gehäuseblock 10 mit den beiden Deckeln 27 und 28 eine kompakte Baueinheit, die auf ihrer Oberseite mit einer weiteren Baueinheit kombiniert ist, in der die elektronische Schaltung untergebracht ist. Die weitere Baueinheit enthält eine Verteilleiste 70 sowie verschiedene Karten oder Chips 71 und 72, auf denen die einzelnen elektronischen Bausteine angebracht sind, z.B. der Mikroprozessor 61, ein Leistungsteil 74 usw. Die weitere Baueinheit ist von einer Haube 75 umgeben, die an ihrer Rückwand eine Durchführung 76 für die elektrischen Leitungen aufweist und an dem Gehäuseblock lösbar befestigt ist.

Die Vorrichtung arbeitet wie folgt :

In der gezeichneten Neutrallage des Steuerschiebers 12 sind die von den Ringnuten 62 und 63 umgebenen Räume der Bohrung 11 mit Druckmittel gefüllt, ebenso die Räume 29 und 30 sowie die Kanäle 50 und 51, da sich die Ventilverschlussteile 33 und 34 in Schliessstellung befinden. Die Kanäle 39 sind drucklos, während die Leitungen 19′ und 20′ und die Räume beiderseits des Kolbens 24 mit Druckmittel gefüllt sind. Der Kolben 24 befindet sich im Stillstand. Soll der Kolben 24 in Fig. 1 nach links verschoben werden, so werden entsprechende Digitalsignale aus dem Regelungsteil A über den Ansteuerungsteil B dem Piezo-Motor 36 zugeführt, der daraufhin den Verschlussteil 34 kurzzeitig in die Offenstellung bewegt. Als Folge davon sinkt kurzzeitig der auf die Stirnfläche 13′ des Steuerschiebers 12 wirkende Druck im Raum 30, und es fliesst Druckmittel über den Kanal 51 und den Kanal 39 zum Tankanschluss 41 ab. Der auf der Stirnfläche 16′ noch wirkende höhere Druck verschiebt den Steuerschieber 12 einen kleinen Schritt in Fig. 1 nach links, so dass der Kolbenabschnitt 15 die ihn umgebende Ringnut freigibt und Druckmittel aus dem Kanal 18′ über diese Ringnut und die Leitung 19′ in den Zylinderraum rechts vom Kolben 24 strömt. Gleichzeitig gibt der Kolbenabschnitt 14 die ihn umgebende Ringnut frei, was eine Entlastung des Zylinderraumes links vom Kolben 24 zur Folge hat, so dass Druckmittel aus diesem Zylinderraum über die Leitung 20′, die zuletztgenannte Ringnut und den zwischen den Kolbenabschnitten 14 und 15 befindlichen Raum der Bohrung 11 zum Tankanschluss 41 abfliessen kann. Die Grösse der Verschiebung des Steuerschiebers 12 und des Kolbens 24 ist abhängig von der Pulsdauer des modulierten Signals. Der Steuerschieber 12 kehrt in seine Neutrallage zurück, wenn der andere Piezo-Motor 35 ein entsprechendes Signal erhält.

**Ansprüche**

1. Elektro-hydraulische oder -pneumatische Stellvorrichtung mit einem Ventil, das in einem Gehäuse (10) als bewegliches Ventilglied einen Steuerschieber (12) enthält, der den Zufluss und den Abfluss von Druckmittel zu bzw. von einem Stellzylinder (23) oder dergl. freigibt oder sperrt, wobei ein Vorsteuerelement vorgesehen ist, das abhängig von einem elektrischen Signal den auf die beiden Stirnflächen (13′, 16′) des Steuerschiebers (12) wirkenden Druck des Druckmittels verändert, wodurch sich die Lage des Steuerschiebers (12) relativ zum Ventilgehäuse (10) ändert, wobei das Vorsteuerelement zwei nach dem Piezoeffekt wirkende Stellorgane (35, 36) mit je einem daran anliegenden Auf/Zu-Ventil (33, 34) umfasst und jeder Stirnfläche (13′, 16′) des Steuerschiebers (12) ein Stellorgan (35, 36) und das von ihm betätigte Auf/Zu-Ventil (33, 34) zugeordnet sind, dadurch **gekennzeichnet**, dass jedes Stellorgan (35, 36) als Stellmotor mit mehreren nach dem Piezoeffekt wirkenden Scheiben ausgebildet ist, deren Dicke sich beim Anlegen einer elektrischen Spannung ändert, dass während dieser Aenderung das zugehörige Auf/Zu-Ventil (33, 34) öffnet, wodurch der auf die diesem Auf/Zu-Ventil zugeordnete Stirnfläche (13′, 16′) des Steuerschiebers (12) wirkende Druck des Druckmittels sinkt, und dass zu beiden Seiten des Steuerschiebers (12) jeweils parallel zu ihm ein Stellmotor (35, 36) mit dem zugehörigen Auf/Zu-Ventil (33, 34) im Ventilgehäuse (10) angeordnet ist.

2. Stellvorrichtung nach Anspruch 1, dadurch gekennzeichnet, dass die Stellmotoren (35, 36) so im Ventilgehäuse (10) angeordnet sind, dass die beiden Auf/Zu-Ventile (33, 34) zueinander diagonal liegen.

3. Stellvorrichtung nach Anspruch 1 oder 2, dadurch gekennzeichnet, dass das Ventilgehäuse (10) mit dem Steuerschieber (12), den beiden Stellmotoren (35, 36) und den beiden Auf/Zu-Ventilen (33, 34) eine Baueinheit bildet, dass die elektronische Schaltung (44) eine weitere Baueinheit bildet und dass beide Baueinheiten modulartig kombinierbar sind.

4. Stellvorrichtung nach einem der Ansprüche 1 bis 3, dadurch gekennzeichnet, dass dem Steuerschieber (12) ein Stellungsgeber (42) zugeordnet ist, dessen Signalausgang über eine Rückführung mit einer elektronischen Steuerschaltung (44) verbunden ist, die die Stellmotoren (35, 36) mit digitalen Stellsignalen versorgt.

5. Stellvorrichtung nach Anspruch 4, dadurch gekennzeichnet, dass der Stellungsgeber (42) als digitaler Stellungsgeber ausgebildet ist.

6. Stellvorrichtung nach einem der Ansprüche 1 bis 5, dadurch gekennzeichnet, dass das Druckmittel zu den beiden Stirnflächen (13′, 16′) des Steuerschiebers (12) führende Kanäle zum Teil in den Endabschnitten (13, 16) des Steuerschiebers (12) verlaufen.

7. Stellvorrichtung nach den Ansprüchen 2 und 3, dadurch gekennzeichnet, dass die das Ventilgehäuse (10) bildende Baueinheit in einen mittleren blockartigen Teil und zwei an dessen Stirnseiten angeordnete flache Deckel (27, 28) unterteilt ist und dass die beiden sich durch den blockartigen Teil erstreckenden Stellmotoren (35, 36) jeweils an einem Deckel 28 bzw. 27) befestigt sind und mit diesem zusammen demontierbar sind.

**Claims**

1. An electrohydraulic or electropneumatic actuator having a valve comprising in a body (10) a spool (12) as moving valve member, the spool releasing or barring the inflow and outflow of pressure medium to and from an actuating cylinder (23) or the like, a pilot element being provided which in dependence upon an electrical signal alters the pressure medium pressure acting on the two end faces (13′, 16′) of the spool (12) so that the position thereof alters relatively to the body (10), the pilot element comprising two piezoelectric actuating elements (35, 36) each in contiguous end-to-end relationship with a respective on-off valve (33, 34), an actuating element (35, 36) and its associated on-off valve (33, 34) being associated with each end face (13′, 16′) of the spool (12), characterised in that each actuating element (35, 36) is in the form of an actuating motor having a number of piezoelectric wafers whose thickness alters in response to an applied voltage, the associated on-off valve (33, 34) opens during such alteration, so that the pressure medium pressure acting on the spool end face (13′, 16′) associated with such valve (33, 34) drops, and an actuating motor (35, 36) with the associated on-off valve (33, 34) is disposed in the valve body (10) on either side of and parallel to the spool (12).

2. An actuator according to claim 1, characterised in that the actuating motors (35, 36) are so disposed in the valve body (10) that the two on-off valves (33, 34) are disposed diagonally opposite one another.

3. An actuator according to claim 1 or 2, characterised in that the valve body (10), spool (12), two actuating motors (33, 36) and two on-off valves (33, 34) together form an assembly unit, the electronic circuit arrangement (44) forms another assembly unit and the two assembly units can be combined with one another module-fashion.

4. An actuator according to any of claim 1 to 3, characterised in that a position sensor (42) is associated with the spool (12) and the signal output of the sensor is connected by way of a feedback to an electronic control circuit arrangement (44) which supplies the actuating motors (35, 36) with digital actuating signals.

5. An actuator according to claim 4, characterised in that the position sensor (42) is a digital position sensor.

6. An actuator according to any of claim 1 to 5, characterised in that ducts conveying the pressure medium to the two end faces (13′, 16′) of the spool (12) extend to some extent in the end parts (13, 16) of the spool (12).

7. An actuator according to claims 2 and 3, characterised in that the assembly unit forming the valve body (10) is subdivided into a central block-like part and two flat covers (27, 28) disposed on the end faces of the central block-like part, and the two actuating motors (35, 36) which extend through the block-like part are each secured to a respective cover (28, 27) and can be demounted together therewith.

## Revendications

1. Appareil électrohydraulique ou électropneumatique de réglage de position, comprenant une valve qui comprend à l'intérieur d'une cage (10) un tiroir de commande (12) qui constitue l'organe mobile de la valve et qui libère ou bloque l'arrivée et le départ de fluide sous pression vers ou d'un cylindre de positionnement (23) ou analogue, un élément pilote, qui est prévu, modifiant en fonction d'un signal électrique la pression du fluide s'exerçant sur les deux surfaces extrêmes (13′, 16′) du tiroir de commande (12) en modifiant la position du tiroir de commande (12) par rapport à la cage (10) de la valve, l'élément pilote comprenant deux organes de réglage (35, 36) opérant selon le principe de l'effet piézoélectrique ainsi qu'une vanne tout-ou-rien (33, 34) prenant appui contre chacun de ces derniers et un organe de réglage (35, 36) ainsi que la vanne tout-ou-rien (33, 34) actionnée par ce dernier étant affectée à chaque surface extreme (13′, 16′) du tiroir de commande (12), caractérisé en ce que chaque organe de réglage (35, 36) est conformé en servomoteur comprenant plusieurs disques opérant selon le principe de l'effet piézoélectrique et dont l'épaisseur se modifie lorsqu'ils sont mis sous une tension électrique, en ce que la vanne tout-ou-rien correspondante (33, 34) s'ouvre pendant cette modification, de sorte que la pression du fluide qui s'exerce sur la surface extrême (13′, 16′) du tiroir de commande (12) qui correspond à cette vanne tout-ou-rien tombe et en ce qu'un servomoteur (35, 36) ainsi que la vanne tout-ou-rien correspondante (33, 34) sont disposés dans la cage de la valve (10) sur chacun des deux côtés du tiroir de commande (12), parallèlement à ce dernier.

2. Appareil de réglage de position selon la revendication 1, caractérisé en ce que les servomoteurs (35, 36) sont disposés dans la cage (10) de la valve de manière que les deux vannes tout-ou-rien (33, 34) soient disposées en diagonale l'une par rapport à l'autre.

3. Appareil de réglage de position selon la revendication 1 ou 2, caractérisé en ce que la cage (10) de la valve forme avec le tiroir de commande (12), les deux servomoteurs (35, 36) et les deux vannes tout-ou-rien (33, 34) une unité de montage, en ce que le circuit électronique (44) forme une autre unité de montage et en ce que les deux unités de montage sont combinables en un module.

4. Appareil de réglage de position selon l'une des revendications 1 à 3, caractérisé en ce qu'un capteur de déplacement (42) affecté au tiroir de commande (12) et dont la sortie des signaux est reliée par une ligne de retour au circuit électronique de commande (44) alimente les servomoteurs (35, 36) en signaux numériques de réglage.

5. Appareil de réglage de position selon la revendication 4, caractérisé en ce que le capteur de déplacement (42) est de type numérique.

6. Appareil de réglage de position selon l'une des revendications 1 à 5, caractérisé en ce que les canaux conduisant le fluide sous pression sur les deux surfaces extrêmes (13′, 16′) du tiroir de commande (12) passent partiellement dans les extrémités (13, 16) du tiroir de commande (12).

7. Appareil de réglage de position selon les revendications 2 et 3, caractérisé en ce que l'unité de montage formant la cage (10) de la valve est subdivisée en une partie médiane en forme de bloc et en deux couvercles plans (27, 28) disposés sur les côtés extrêmes de ce dernier et en ce que chacun des deux servomoteurs (35, 36) qui traversent la partie en forme de bloc, est fixé à un couvercle (28 ou 27) et est démontable avec ce dernier.

# Fig.1

# Fig. 2

# Fig. 3